# EUROPÄISCHE PATENTSCHRIFT

(11) **EP 2 250 537 B1**
(45) Veröffentlichungstag und Bekanntmachung des Hinweises auf die Patenterteilung: **12.06.2019**
(21) Anmeldenummer: 09711174.4
(22) Anmeldetag: 13.02.2009
(51) Int. Cl.: B29C 45/42, G05B 19/12, G05B 19/418

(54) **VERFAHREN ZUM ANBRINGEN WENIGSTENS EINES RFID-TRANSPONDERS AUF EINEM KUNSTSTOFFBAUTEIL**
METHOD FOR APPLYING AT LEAST ONE RFID-TRANSPONDER TO A PLASTIC COMPONENT
PROCÉDÉ POUR INSTALLER AU MOINS UN TRANSPONDEUR RFID SUR UN ÉLÉMENT EN MATIÈRE PLASTIQUE

(30) Priorität: 15.02.2008 DE 102008009395
(43) Veröffentlichungstag der Anmeldung: 17.11.2010
(73) Patentinhaber: Rehau AG + Co, 95111 Rehau (DE)
(72) Erfinder: LIPPERT, Reinhard, 95679 Waldershof (DE); ERHARDT, Thomas, 95182 Döhlau (DE)
(86) Internationale Anmeldenummer: PCT/EP2009/001014
(87) Internationale Veröffentlichungsnummer: WO 2009/100915

(56) Entgegenhaltungen:
- EP-A- 1 748 402
- GB-A- 2 282 628
- JP-A- 2 103 112
- JP-A- 10 029 294
- JP-A- H08 318 919
- JP-A- 2004 149 125
- US-A- 4 611 380
- US-A- 4 927 486
- US-A1- 2006 200 261

## Beschreibung

### Hintergrund der Erfindung

Die Erfindung betrifft ein Verfahren zum Anbringen wenigstens eines RFID-Transponders auf einem Automobil-Kunststoffbauteil.

Bei der automatisierten Herstellung von Kunststoffbauteilen, wie beispielsweise der automatisierten Herstellung von Kunststoffstoßfängern für die Automobilindustrie, durchlaufen die Kunststoffbauteile nach der Spritzgussfertigung in der Regel eine Vielzahl von Produktionsprozessen an unterschiedlichen Prozessstandorten. Typische Produktionsprozesse umfassen hierbei beispielsweise die Lackierung von Kunststoffbauteil-Oberflächen bzw. der Lackierung vorgeschaltete bzw. nachgeschaltete Prozesse. Um eine Rückverfolgbarkeit bzw. Identifizierung einzelner Kunststoffbauteile während der gesamten Herstellung zu gewährleisten, ist es bekannt, auf die Kunststoffbauteile einen RFID-Transponder anzubringen, auf dem Identifizierungsdaten, wie beispielsweise eine Seriennummer oder dergleichen, abgespeichert sein können. Unter RFID (Abk. für engl. "Radio Frequency Identification") versteht man ein technisches System, das die äußerst praktische Möglichkeit bietet Daten lesen zu können, ohne diese Daten berühren oder direkt sehen zu müssen, denn sie werden über Funkerkennung übermittelt. Bekannte RFID-Systeme bestehen hauptsächlich aus dem RFID-Transponder (auch RFID-Tag genannt) und einem RFID-Lesegerät, wobei der RFID-Transponder auf einem Chip wichtige Daten, wie beispielsweise die Identifizierungsdaten enthält, die er auf Anregung von außen, nämlich durch das Lesegerät, aussendet. So ist eine Rückverfolgbarkeit von Kunststoffbauteilen während der gesamten Herstellung möglich. Bekannte RFID-Transponder können Abmessungen in der Größenordung weniger Millimeter aufweisen, und können bequem an beliebigen Gegenständen angebracht werden.

Gegenwärtig erfolgt die Anbringung der RFID-Transponder auf die Kunststoffbauteile meist manuell, und zwar wenn diese auf einem Warenträger angeordnet sind, der dafür vorgesehen ist, die Kunststoffbauteile zu den einzelnen Prozessstandorten zu überführen. Da auf einem Warenträger meist bis zu acht oder mehr Kunststoffbauteile angeordnet sind ist die Applizierung der RFID-Transponder infolge der unterschiedlichen Positionen der Kunststoffbauteile auf dem Warenträger sehr aufwendig, insbesondere wenn die Kunststoffbauteile mit geringem Abstand zueinander auf dem Warenträger angeordnet sind, was die Applizierung deutlich erschwert. Aus der JP 10 029294 A ist bekannt Labels mit einer Appliziereinrichtung an ein Formteil anzubringen.

### Zugrundeliegende Aufgabe

Der Erfindung liegt daher die Aufgabe zugrunde, ein Verfahren anzugeben, mit dem ein praktisches und einfaches Aufbringen eines RFID-Transponders auf ein Automobil-Kunststoffbauteil möglich ist.

### Erfindungsgemäße Lösung

Diese Aufgabe wird erfindungsgemäß mit einem Verfahren mit den Merkmalen des Patentanspruchs 1 gelöst.

Mittels des erfindungsgemäßen Verfahrens ist eine Einbindung des Anbringens bzw. Applizierens von RFID-Transpondern auf Automobil-Kunststoffbauteile in einen gesamten automatisierten Herstellungsprozess der Kunststoffbauteile möglich, einhergehend mit einer gegenüber bekannten Lösungen praktischeren und einfacheren Möglichkeit des Anbringens der RFID-Transponder.

Erfindungsgemäß erfolgt das Anbringen des RFID-Transponders auf dem Automobil-Kunststoffbauteil mittels einer Anbring-Vorrichtung, und zwar nachdem das Kunststoffbauteil mittels einer Überführungs-Vorrichtung, wie beispielsweise einem Roboter bzw. einem Industrieroboter in die vorgegebene Position überführt worden ist. Erst nach erfolgtem Anbringen des RFID-Transponders wird das Kunststoffbauteil auf einem beweglichen Warenträger abgelegt, der dafür vorgesehen sein kann, eine Anzahl von Kunststoffbauteilen weiteren Herstellungsprozessen, wie beispielsweise dem Lackierprozess, zuzuführen. So kann ein Warenträger, auf dem eine Anzahl von Kunststoffbauteilen abgelegt werden können, nacheinander mit Kunststoffbauteilen bestückt werden, an denen jeweils wenigstens ein RFID-Transponder angebracht ist. Erfindungsgemäß erfolgt das Anbringen der RFID-Transponder also bevor die Kunststoffbauteile auf dem Warenträger abgelegt werden, so dass ein bekanntes umständliches Anbringen der RFID-Transponder, wenn sich die Kunststoffbauteile bereits auf dem Warenträger befinden, entfällt.

Zweckmäßigerweise ist das Automobil-Kunststoffbauteil ein durch einen Spritzgussprozess in einer Spritzgussform hergestelltes Kunststoffbauteil, wobei die Überführungs-Vorrichtung das Kunststoffbauteil nach dem Spritzgussprozess und vor dem ersten Schritt aus der Spritzgussform entnimmt. So kann erfindungsgemäß eine Einbindung des erfindungsgemäßen Verfahrens in einen automatisierten Herstellungsprozess für Kunststoffbauteile bereitgestellt werden bei dem zu Beginn eine Spritzgussfertigung des Kunststoffbauteils in einer Spritzgussform erfolgt. Erfindungsgemäß weist das Automobil-Kunststoffbauteil ferner eine zu beflammende Oberfläche auf, wobei die zu beflammende Oberfläche nach der Entnahme aus der Spritzgussform und vor dem ersten Schritt beflammt wird.

Bei einer praktischen Weiterbildung des erfindungsgemäßen Verfahrens werden nach dem ersten Schritt und vor dem zweiten Schritt die Identifizierungsdaten des Kunststoffbauteils auf dem RFID-Transponder abgespeichert. Bei einer alternativen praktischen Weiterbildung können die Identifizierungsdaten des Kunststoffbauteils während einer Zeitdauer, die wenigstens einen Teilabschnitt der Dauer des ersten Schritts umfasst, auf dem RFID-Transponder abgespeichert werden. Insgesamt betrachtet ermöglichen diese praktischen Weiterbildungen vordem Anbringen des RFID-Transponders an dem Kunststoffbauteil die Abspeicherung von Identifizierungsdaten des Kunststoffbauteils auf dem RFID-Transponder. Hierbei werden die Identifizierungsdaten in bekannter Weise auf einem Speicherbaustein bzw. einem Chip des RFID-Transponders abgespeichert.

Die Identifizierungsdaten können erfindungsgemäß eine Seriennummer und/oder eine Artikelnummer des Kunststoffbauteils und/oder beliebige andere Daten umfassen. Die Identifizierungsdaten können eine Datenstruktur aufweisen, die eine Verknüpfung einer Seriennummer des Kunststoffbauteils mit einer Artikelnummer des Kunststoffbauteils umfasst.

Bevorzugt werden die Identifizierungsdaten von einer Steuervorrichtung an die Anbring-Vorrichtung gesendet, wobei die Anbring-Vorrichtung dazu eingerichtet ist, die Identifizierungsdaten zu empfangen und auf dem RFID-Transponder abzuspeichern. Hierbei kann die Steuervorrichtung in Form eines Computers ausgebildet sein, wobei die Identifizierungsdaten auf einer Speichereinheit des Computers abgespeichert sein können. Alternativ können die Identifizierungsdaten auch in einer Datenbank eines Zentralcomputers abgelegt sein, der mit dem Computer vernetzt ist. Erfindungsgemäß empfängt die Anbring-Vorrichtung die Identifizierungsdaten und speichert sie auf dem RFID-Transponder ab.

Bei einer weiteren praktischen Weiterbildung des erfindungsgemäßen Verfahrens wird nach dem ersten Schritt und vor dem zweiten Schritt die Lesefähigkeit und/oder Schreibfähigkeit des RFID-Transponders überprüft. Bei einer alternativen praktischen Weiterbildung wird die Lesefähigkeit und/oder Schreibfähigkeit des RFID-Transponders während einer Zeitdauer, die wenigstens einen Teilabschnitt der Dauer des ersten Schritts umfasst, überprüft. So kann erfindungsgemäß bereits vordem Anbringen des RFID-Transponders an dem Kunststoffbauteil eine Funktionsstörung des RFID-Transponders erkannt werden und dieser durch einen funktionstüchtigen RFID-Transponder ersetzt werden. Hierbei ist die Anbring-Vorrichtung bevorzugt dazu eingerichtet ist, die Lesefähigkeit und/oder Schreibfähigkeit des RFID-Transponders zu überprüfen.

Das Automobil-Kunststoffbauteil kann z.B. ein Stossfänger, ein Heckspoiler, eine Radverbreiterung, ein Schweller, eine Türunterkante, etc. sein.

### Kurzbeschreibung der Zeichnung

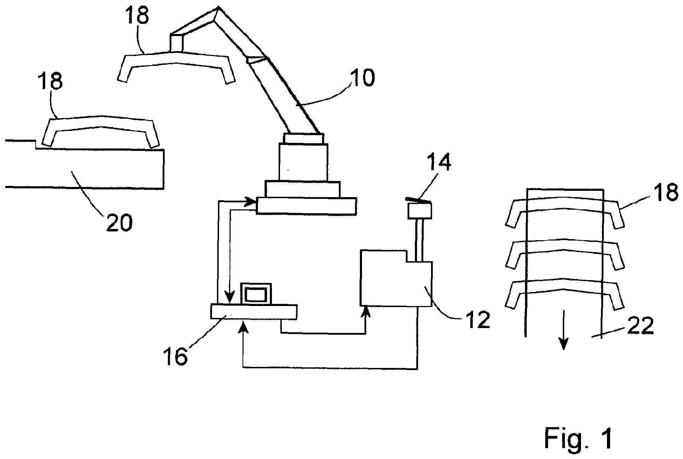

Nachfolgend wird ein Ausführungsbeispiel der Erfindung anhand der beigefügten Zeichnung näher erläutert. Hierzu zeigt Fig. 1 eine schematische Darstellung einer erfindungsgemäßen Überführungs-Vorrichtung zusammen mit einer erfindungsgemäßen Anbring-Vorrichtung, angeordnet zwischen einem beweglichen Warenträger und einer Spritzgusseinrichtung.

Die in Fig. 1 schematisch dargestellte Überführungs-Vorrichtung ist in Form eines Roboters 10 ausgebildet. Ferner ist eine erfindungsgemäße Anbring-Vorrichtung 12 vorgesehen, auf der ein RFID-Transponder 14 abgelegt ist, und eine erfindungsgemäße Steuervorrichtung in Form eines Computers 16, der eine digitale Eingangs- und Ausgangssteuerung aufweist.

Schematisch dargestellt ist die Situation, bei welcher der Roboter 10 ein Kunststoffbauteil in Form eines Stoßfängers 18 aus einer Spritzgussform (nicht näher dargestellt) einer Spritzgusseinrichtung 20 entnommen hat und einer nicht näher dargestellten Beflammungsvorrichtung zuführt, um die Oberfläche des Stoßfängers 18 zur Oberflächenaktivierung für eine später nachfolgende Lackierung zu beflammen. Nach der Beflammung erfolgt der erste Schritt des erfindungsgemäßen Verfahrens, bei dem der Stoßfänger 18 in die erfindungsgemäß vorgegebene Position überführt wird, die sich über der Anbring-Vorrichtung 12 und oberhalb des RFID-Transponders 14 befindet. Nachdem der Stoßfänger 18 die vorgegebene Position eingenommen hat, wird der RFID-Transponder 14, auf dem Identifizierungsdaten des Stoßfängers 18 umfassend eine Seriennummer und/oder eine Artikelnummer abgespeichert sind, gemäß dem zweiten Schritt des erfindungsgemäßen Verfahrens über in der Anbring-Vorrichtung 12 bereitgestellte Druckluft auf den Stoßfänger 18 aufgeblasen, um den RFID-Transponder 14 an einer Innenseite des Stoßfängers 18 anzubringen. Hiernach erfolgt gemäß dem dritten Schritt des erfindungsgemäßen Verfahrens die Zuführung des Stoßfängers 18 zu einem beweglichen Warenträger 22 und das Ablegen des Stoßfängers 18 auf dem Warenträger 22, der dafür vorgesehen ist, den Stoßfänger 18 bzw. mehrere Stoßfänger 18 weiteren Produktionsprozessen zuzuführen, bei denen beispielsweise eine Lackierung des Stoßfängers 18 bzw. der Stoßfänger 18 erfolgt, oder der Lackierung vorgeschaltete oder nachgeschaltete Prozesse.

Nachfolgend erfolgt eine detailliertere Beschreibung des erfindungsgemäßen Ablaufs nach erfolgter Beflammung des Stoßfängers 18 in Verbindung mit den schematisch in Pfeilform dargestellten Signalübertragungsrichtungen.

Nach erfolgter Beflammung und während der Überführung des Stoßfängers 18 in die vorgegebene Position über der Anbring-Vorrichtung überträgt eine nicht näher dargestellte Steuereinrichtung des Roboters 10, die dazu eingerichtet ist, Startsignale an den Computer 16 zu senden, ein Startsignal an den Computer 16, der dazu eingerichtet ist, das Startsignal zu empfangen und nach Empfang des Startsignals Identifizierungsdaten des Stoßfängers 18, vorzugsweise umfassend eine Artikelnummer und eine Seriennummer des Stoßfängers 18, an die Anbring-Vorrichtung 12 zu übertragen, die dazu eingerichtet ist, die Identifizierungsdaten zu empfangen und auf dem RFID-Transponder 14 abzuspeichern. Hierbei ist der RFID-Transponder 14 bevorzugt auf einer Etikette angebracht oder in dieser aufgenommen oder in Form einer Etikette mit einem integrierten RFID-Chip ausgebildet, wobei die Anbring-Vorrichtung 12 mittels einer Druckeinrichtung ferner dazu eingerichtet ist, die Identifizierungsdaten zusätzlich auf die Etikette aufzudrucken, wobei die Identifizierungsdaten insbesondere in Barcode-Form bzw. Strichcode-Form aufgedruckt werden können.

Ferner ist die Anbring-Vorrichtung 12 dazu eingerichtet, vor der Abspeicherung die Lesefähigkeit und/oder Schreibfähigkeit des RFID-Transponders 14 zu überprüfen und diesen, sofern die Überprüfung eine Funktionsstörung des RFID-Transponders 14 feststellt, auszuschleusen und durch einen funktionstüchtigen RFID-Transponder zu ersetzen.

Sobald der Roboter 10 den Stoßfänger 18 in die vorgegebene Position überführt hat, so dass der Stoßfänger 18 zum Anbringen bzw. Applizieren des RFID-Transponders 14 bereit ist, sendet die Steuereinrichtung des Roboters 10 ein weiteres Startsignal an den Computer 16, wobei der Computer 16 nach Empfang dieses Startsignals dazu eingerichtet ist, ein Befehlssignal an die Anbring-Vorrichtung 12 zu senden (beispielsweise über eine serielle RS-232-Schnittstelle), wobei die Anbring-Vorrichtung 12 dazu eingerichtet ist, das Befehlsignal zu empfangen und nach Empfang des Befehlssignals den abgelegten RFID-Transponder 14 an dem Stoßfänger 18 durch "Aufblasen" anzubringen. Nach erfolgtem Anbringen bzw. Applizieren des RFID-Transponders 14 an dem Stoßfänger 18 sendet die Anbring-Vorrichtung 12 ein Rückmeldesignal, dass die Identifizierungsdaten des Stoßfängers 18 umfasst, an den Computer 16, wobei der Computer 16 dazu eingerichtet ist, nach Empfang des Rückmeldesignals die Übereinstimmung der Identifizierungsdaten des Rückmeldesignals mit den zuvor an die Anbring-Vorrichtung 12 übertragenen Identifizierungsdaten zu überprüfen und bei festgestellter Übereinstimmung ein Befehlssignal an die Steuereinrichtung des Roboters 10 zu senden, um diesen zu veranlassen, den Stoßfänger 18 dem beweglichen Warenträger 22 zuzuführen und auf diesem abzulegen.

Ferner kann nach festgestellter Übereinstimmung eine Verknüpfung der Artikelnummer des Stoßfängers 18 mit der Seriennummer des Stoßfängers 18 erfolgen, um eine Datenstruktur zu bilden, die auf einer Datenbank abgelegt bzw. abgespeichert werden kann, die beispielsweise eine Datenbank eines mit dem Computer 16 vernetzten Zentralcomputers ist. So ist erfindungsgemäß eine eindeutige Zuordnung von Artikelnummer und Seriennummer möglich.

Insgesamt betrachtet ist mittels des beschriebenen Ablaufs ein vollautomatisches Applizieren bzw. Anbringen von RFID-Transpondern 14 auf den Stoßfängern 18 möglich, wobei Fehlbedienungen und/oder falsches Anbringen bzw. Applizieren im Vorfeld ausgeschlossen werden.

### Bezugszeichenliste

- 10: Roboter
- 12: Anbring-Vorrichtung
- 14: RFID-Transponder
- 16: Computer
- 18: Stoßfänger
- 20: Spritzgusseinrichtung
- 22: Warenträger

## Patentansprüche

1. Verfahren zum Anbringen wenigstens eines RFID-Transponders (14) auf einem zu lackierenden Automobil-Kunststoffbauteil (18), wobei auf dem RFID-Transponder (14) Identifizierungsdaten des Automobil-Kunststoffbauteils (18) abspeicherbar sind, wobei bei dem Verfahren
- zunächst das Automobil-Kunststoffbauteil (18) einer Beflammungsvorrichtung zugeführt wird, um die Oberfläche des Automobil-Kunststoffbauteils (18) zur Oberflächenaktivierung für eine später nachfolgende Lackierung zu beflammen,
- in einem ersten Schritt das Automobil-Kunststoffbauteil (18) von einer Überführungs-Vorrichtung (10) in eine vorgegebene Position überführt wird,
- in einem zweiten Schritt der RFID-Transponder (14) von einer in Umgebung der vorgegebenen Position angeordneten Anbring-Vorrichtung (12) an dem Automobil-Kunststoffbauteil (18) angebracht wird, wobei das Automobil-Kunststoffbauteil (18) während des Anbringens des RFID-Transponders (14) von der Überführungs-Vorrichtung (10) in der vorgegebenen Position gehalten wird, und
- in einem dritten Schritt das Automobil-Kunststoffbauteil (18) von der Überführungs-Vorrichtung (10) einem beweglichen Warenträger (22) zugeführt und auf diesem abgelegt wird.

2. Verfahren nach Anspruch 1, **dadurch gekennzeichnet, dass** das Automobil-Kunststoffbauteil (18) ein durch einen Spritzgussprozess in einer Spritzgussform hergestelltes Automobil-Kunststoffbauteil (18) ist, wobei die Überführungs-Vorrichtung (10) das Automobil-Kunststoffbauteil (18) nach dem Spritzgussprozess und vor dem ersten Schritt aus der Spritzgussform entnimmt.

3. Verfahren nach Anspruch 1 oder 2, **dadurch gekennzeichnet, dass** nach dem ersten Schritt und vor dem zweiten Schritt die Identifizierungsdaten des Automobil-Kunststoffbauteils (18) auf dem RFID-Transponder (14) abgespeichert werden.

4. Verfahren nach Anspruch 1 oder 2, **dadurch gekennzeichnet, dass** während einer Zeitdauer, die wenigstens einen Teilabschnitt der Dauer des ersten Schritts umfasst, die Identifizierungsdaten des Kunststoffbauteils (18) auf dem RFID-Transponder (14) abgespeichert werden.

5. Verfahren nach Anspruch 3 oder 4, **dadurch gekennzeichnet, dass** die Identifizierungsdaten von einer Steuervorrichtung (16) an die Anbring-Vorrichtung (12) gesendet werden, wobei die Anbring-Vorrichtung (12) dazu eingerichtet ist, die Identifizierungsdaten zu empfangen und auf dem RFID-Transponder (14) abzuspeichern.

6. Verfahren nach einem der vorangehenden Ansprüche, **dadurch gekennzeichnet, dass** nach dem ersten Schritt und vor dem zweiten Schritt die Lesefähigkeit und/oder Schreibfähigkeit des RFID-Transponders (14) überprüft wird.

7. Verfahren nach einem der Ansprüche 1 bis 5, **dadurch gekennzeichnet, dass** während einer Zeitdauer, die wenigstens einen Teilabschnitt der Dauer des ersten Schritts umfasst, die Lesefähigkeit und/oder Schreibfähigkeit des RFID-Transponders (14) überprüft wird.

8. Verfahren nach Anspruch 6 oder 7, **dadurch gekennzeichnet, dass** die Anbring-Vorrichtung (12) dazu eingerichtet ist, die Lesefähigkeit und/oder Schreibfähigkeit des RFID-Transponders (14) zu überprüfen.

## Claims

1. Method for attaching at least one RFID transponder (14) to an automotive plastics component (18) which is to be painted, wherein identification data of the automotive plastics component (18) can be stored on the RFID transponder (14), wherein in the method
- the automotive plastics component (18) is first brought to a flame treatment device for treating the surface of the automotive plastics component (18) with flame in order to activate the surface for subsequent painting,
- in a first step, the automotive plastics component (18) is transferred by a transfer device (10) into a specified position,
- in a second step, the RFID transponder (14) is attached to the automotive plastics component (18) by an attachment device (12) arranged in the vicinity of the specified position, wherein the automotive plastics component (18) is held in the specified position by the transfer device (10) while the RFID transponder (14) is being attached, and
- in a third step, the automotive plastics component (18) is brought by the transfer device (10) to a movable product carrier (22) and deposited thereon.

2. Method according to claim 1, **characterised in that** the automotive plastics component (18) is an automotive plastics component (18) which has been produced by an injection-moulding process in an injection mould, wherein the transfer device (10) removes the automotive plastics component (18) from the injection mould after the injection-moulding process and before the first step.

3. Method according to claim 1 or 2, **characterised in that**, after the first step and before the second step, the identification data of the automotive plastics component (18) are stored on the RFID transponder (14).

4. Method according to claim 1 or 2, **characterised in that** the identification data of the automotive plastics component (18) are stored on the RFID transponder (14) during a period of time which includes at least a portion of the duration of the first step.

5. Method according to claim 3 or 4, **characterised in that** the identification data are sent to the attachment device (12) by a control device (16), wherein the attachment device (12) is adapted to receive the identification data and store them on the RFID transponder (14).

6. Method according to any one of the preceding claims, **characterised in that**, after the first step and before the second step, the readability and/or writability of the RFID transponder (14) is checked.

7. Method according to any one of claims 1 to 5, **characterised in that** the readability and/or writability of the RFID transponder (14) is checked during a period of time which includes at least a portion of the duration of the first step.

8. Method according to claim 6 or 7, **characterised in that** the attachment device (12) is adapted to check the readability and/or writability of the RFID transponder (14).

## Revendications

1. Procédé pour la mise en place d'au moins un transpondeur RFID (14) sur un composant automobile en matière plastique (18) à peindre, des données d'identification du composant automobile en matière plastique (18) pouvant être mémorisées sur le transpondeur RFID (14), dans lequel dans le procédé
- le composant automobile en matière plastique (18) est d'abord conduit à un dispositif de flammage afin de flammer la surface du composant automobile en matière plastique (18) pour l'activation de la surface pour une peinture ultérieure,
- dans une première étape, le composant automobile en matière plastique (18) est transféré par un dispositif de transfert (10) dans une position prédéfinie,
- dans une deuxième étape, le transpondeur RFID (14) est mise en place sur le composant automobile en matière plastique (18) par un dispositif de mise en place (12) disposé aux alentours de la position prédéfinie, le composant automobile en matière plastique (18) étant maintenu par le dispositif de transfert (10) dans la position prédéfinie pendant la mise en place du transpondeur RFID (14), et
- dans une troisième étape, le composant automobile en matière plastique (18) est conduit à un support mobile de marchandises (22) et déposé sur celui-ci par le dispositif de transfert (10).

2. Procédé selon la revendication 1, **caractérisé en ce que** le composant automobile en matière plastique (18) est un composant automobile en matière plastique (18) fabriqué dans un moule de moulage par injection selon un processus de moulage par injection, le dispositif de transfert (10) retirant le composant automobile en matière plastique (18) du moule de moulage par injection après le processus de moulage par injection et avant la première étape.

3. Procédé selon la revendication 1 ou 2, **caractérisé en ce que**, après la première étape et avant la deuxième étape, les données d'identification du composant automobile en matière plastique (18) sont mémorisées sur le transpondeur RFID (14).

4. Procédé selon la revendication 1 ou 2, **caractérisé en ce que**, pendant une période de temps, qui comprend au moins une partie de la durée de la première étape, les données d'identification du composant en matière plastique (18) sont mémorisées sur le transpondeur RFID (14).

5. Procédé selon la revendication 3 ou 4, **caractérisé en ce que** les données d'identification sont transmises au dispositif de mise en place (12) par un dispositif de commande (16), le dispositif de mise en place (12) étant conçu pour recevoir les données d'identification et les mémoriser sur le transpondeur RFID (14).

6. Procédé selon l'une des revendications précédentes, **caractérisé en ce que**, après la première étape et avant la deuxième étape, la capacité de lecture et/ou la capacité d'écriture du transpondeur RFID (14) est contrôlée.

7. Procédé selon l'une des revendications 1 à 5, **caractérisé en ce que**, pendant une période de temps, qui comprend au moins une partie de la durée de la première étape, la capacité de lecture et/ou la capacité d'écriture du transpondeur RFID (14) est contrôlée.

8. Procédé selon la revendication 6 ou 7, **caractérisé en ce que** le dispositif de mise en place (12) est conçu pour contrôler la capacité de lecture et/ou la capacité d'écriture du transpondeur RFID (14).
